# EUROPEAN PATENT APPLICATION

(11) **EP 4 714 314 A1**
(43) Date of publication of application: **25.03.2026**
(21) Application number: 25179691.8
(22) Date of filing: 29.05.2025
(51) Int. Cl.: A47J 31/44

(54) **A HOT BEVERAGE PREPARATION MACHINE COMPRISING A PLURALITY OF HEATERS**

(30) Priority: 19.09.2024 TR 2024124420
(71) Applicant: Arçelik Anonim Sirketi, 34445 Istanbul (TR)
(72) Inventor: POLAT, EMRE, 34445 ISTANBUL (TR); SENYAYLA, CAN BERK, 34445 ISTANBUL (TR); DUMAN, DUHAN, 34445 ISTANBUL (TR); AKSU, BULENT CAN, 34445 ISTANBUL (TR); SEVEN, ONER, 34445 ISTANBUL (TR)

(57) **Abstract**

The present invention relates to a hot beverage preparation machine (1) comprising a water tank (2) suitable to be filled with water; a heater (3) which enables the water in the water tank (2) to be heated; a brewing chamber (4) wherein the water heated in the water tank (2) is delivered and wherein the brewing process is performed as the result of the interaction between the raw beverage material and water; a beverage chamber (5) wherein the brewed beverage is delivered; and a heating surface (6) which is disposed under the beverage chamber (5) and which is in contact with the beverage chamber (5).

## Description

The present invention relates to a hot beverage preparation machine comprising a plurality of heaters.

In state of the art hot beverage preparation machines, the water filled into the water tank is heated by a heater and is transferred to the brewing chamber containing therein the raw material of the beverage to be prepared. The brewing process is performed in the brewing chamber as a result of the interaction between the raw beverage material and water. The filter components should be integrated in a simple manner in the hot beverage preparation machines by the user in order to also prepare hot beverages like coffee requiring the realization of the filtering process in the preparation phase in the hot beverage preparation machines which perform the brewing process. The filtered drink fills into a carafe and becomes ready to drink. However, transferring the brewed hot beverage into the carafe suddenly causes the hot beverage to hit the cold surface. This causes risks such as cracking and breaking of the carafe and the coffee failing to maintain the desired temperature. It becomes difficult to keep the coffee, which cools down upon filling into the carafe, at the desired temperature while waiting. The resistance type heater is continuously operated to provide heating in order to keep the coffee hot. This causes an increase in energy consumption.

In the state of the art European Patent Document No. WO2014025669, a coffee maker is disclosed, comprising a plurality of heaters. The purpose of the technique is to reheat the water before being transferred to the brewing chamber.

The aim of the present invention is the realization of a hot beverage preparation machine which ensures that the beverage is kept hot for a long time without increasing energy consumption.

In the hot beverage preparation machine realized in order to attain the aim of the present invention and explicated in the claims, the water heated in the water tank is transferred into the brewing chamber. The brewing process is performed in the brewing chamber as a result of the interaction between the raw beverage ingredient and water. The prepared beverage is transferred to the beverage chamber and the beverage is kept hot by means of the heating surface which is disposed under the beverage chamber and which is in contact with the heater.

The hot beverage preparation machine of the present invention comprises a first heater and a second heater which are disposed under the heating surface. The first heater and the second heater are different types of heaters, providing energy savings depending on the intended use.

In an embodiment of the present invention, the hot beverage preparation machine comprises the first heater of the resistance type and the second heater of the PTC type. By means of the first heater of the resistance type, fast and efficient heating of the water is ensured. By means of the second heater of the PTC type, continuous heating is provided without requiring high temperatures.

In an embodiment of the present invention, the hot beverage preparation machine comprises the second heater which enables the empty beverage chamber and the heating surface to be heated. By means of the second heater, the beverage chamber is enabled to be heated before transferring the beverage to the beverage chamber. Thus, the beverage chamber is kept warmer than the ambient air and the beverage is prevented from cooling down during the transfer of the hot beverage.

In an embodiment of the present invention, the hot beverage preparation machine comprises the first heater which enables the water in the water tank to be heated. Since the water heating process requires a higher power heater, the first heater of the resistance type is used. Thus, the water is enabled to be heated in a more quick and effective manner.

In an embodiment of the present invention, the hot beverage preparation machine comprises the second heater which keeps the temperature of the beverage transferred to the beverage chamber at the desired level. Thus, energy saving is provided and the beverage is enabled to be kept hot.

In an embodiment of the present invention, the hot beverage preparation machine comprises a control unit which enables the beverage chamber and the heating surface to be heated a certain level before the prepared beverage is transferred to the beverage chamber.

In an embodiment of the present invention, the hot beverage preparation machine comprises a temperature sensor which is disposed on the heating surface, and the control unit which ends the preheating process depending on the data received from the temperature sensor. When the beverage chamber and the heating surface temperature reach the desired level, the heating process is ended.

In an embodiment of the present invention, the hot beverage preparation machine comprises the control unit which enables the second heater to be activated before the brewing process starts, the first heater to be activated to heat the water in the water tank, and the second heater to be activated again after the beverage is prepared and transferred to the beverage chamber. Thus, the energy consumption is decreased and the user satisfaction is improved.

By means of the present invention, a hot beverage preparation machine is realized, comprising two heaters which are operated independently of each other and which have different features.

The hot beverage preparation machine realized in order to attain the aim of the present invention is illustrated in the attached figures, where:

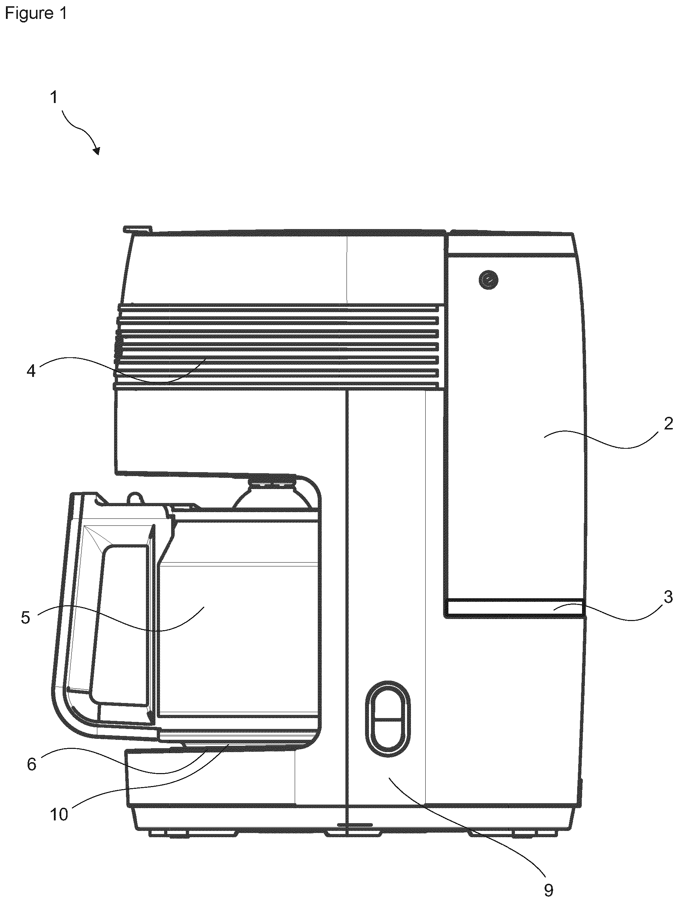

Figure 1 - is the front view of the hot beverage preparation machine.

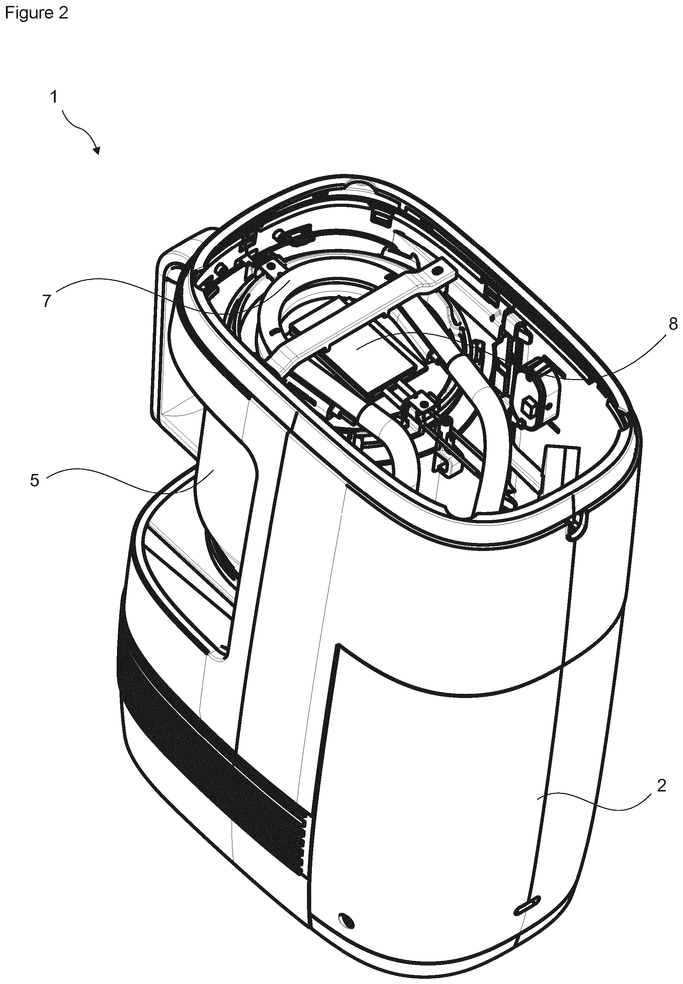

Figure 2 - is the bottom view of the hot beverage preparation machine.

The elements illustrated in the figures are numbered as follows:
1- Hot beverage preparation machine
2- Water tank
3- Heater
4- Brewing chamber
5- Beverage chamber
6- Heating surface
7- First heater
8- Second heater
9- Control unit
10- Temperature sensor

The hot beverage preparation machine (1) comprises a water tank (2) suitable to be filled with water; a heater (3) which enables the water in the water tank (2) to be heated; a brewing chamber (4) wherein the water heated in the water tank (2) is delivered and wherein the brewing process is performed as the result of the interaction between the raw beverage material and water; a beverage chamber (5) wherein the brewed beverage is delivered; and a heating surface (6) which is disposed under the beverage chamber (5) and which is in contact with the beverage chamber (5). The water in the water tank (2) is heated and transferred to the brewing chamber (4). The raw beverage material in the brewing chamber (4) is brewed with the hot water and transferred to the beverage chamber (5). Thus, the beverage is prepared.

The hot beverage preparation machine (1) of the present invention comprises a first heater (7) and a second heater (8) which are disposed under the heating surface (6). The first heater (7) and the second heater (8) are disposed under the heating surface (6). The first heater (7) and the second heater (8) can be used sequentially in various steps by means of the independent nature thereof. Consequently, energy saving is provided.

In an embodiment of the present invention, the hot beverage preparation machine (1) comprises the first heater of the resistance type (7) and the second heater of the PTC type (8). The first heater (7) is of the resistance type and provides a faster heating process with higher power. By means of the second heater (8) of the PTC type, a heating process with low power can be provided for a long time and at low temperatures.

In an embodiment of the present invention, the hot beverage preparation machine (1) comprises the second heater (8) which enables the empty beverage chamber (5) and the heating surface (6) to be heated before the brewing process. By means of the second heater (8), the beverage chamber (5) can be heated while empty. By means of the low power of the second heater (8), the beverage chamber (5) is enabled to be heated at a low temperature without being damaged.

In an embodiment of the present invention, the hot beverage preparation machine (1) comprises the first heater (7) which enables the water in the water tank (2) to be heated before being transferred to the brewing chamber (4). By means of the powerful first heater (7) which provides the rapid heating, the water in the water tank (2) is enabled to be heated before being transferred to the brewing chamber (4). The water heated by means of the first heater (7) before being transferred to the brewing chamber (4) and the raw beverage material are used to prepare the beverage.

In an embodiment of the present invention, the hot beverage preparation machine (1) comprises the second heater (8) which enables the prepared beverage to be kept at the desired temperature. The temperature of the beverage prepared in the brewing chamber (4) is prevented from decreasing by means of the second heater (8) after being transferred to the beverage chamber (5). Thus, the beverage in the beverage chamber (5) can be kept at the desired temperature.

In an embodiment of the present invention, the hot beverage preparation machine (1) comprises a control unit (9) which enables a preheating process to be performed wherein the heating surface (6) and the beverage chamber (5) are heated to a predetermined level by means of the second heater (8) before the brewing process is carried out. The control unit (9) enables the beverage chamber (5) and the heating surface (6) to be heated to a temperature predetermined by the manufacturer. Thus, the temperature of the beverage chamber (5) is increased and the temperature thereof is prevented from decreasing by means of the direct contact of the prepared beverage with the hot chamber (5). Moreover, deformations which may occur in the beverage chamber (5) due to the hot-cold difference are also prevented.

In an embodiment of the present invention, the hot beverage preparation machine (1) comprises a temperature sensor (10) which is disposed on the heating surface (6), and the control unit (9) which ends the preheating process depending on the data received from the temperature sensor (10). The control unit (9) ends the preheating process by means of the temperature sensor (10) disposed on the heating surface (6). Thus, the beverage chamber (5) is brought to the desired temperature.

In an embodiment of the present invention, the hot beverage preparation machine (1) comprises the control unit (9) which ensures the performance of the steps of heating the heating surface (6) and the beverage chamber (5) by activating the second heater (8) before the brewing process starts, heating the cold water in the water tank (2) by being passing over the first heater (7) to be taken into the brewing chamber (4), filtering the brewed beverage to be transferred to the beverage chamber (5), and keeping the beverage hot by activating the second heater (8) again. Before the brewing process starts, the second heater (8) is activated such that the heating surface (6) and the beverage chamber (5) are heated to some extent by means of the heating surface (6). When the heating process is carried out by means of a PTC type heater, the beverage chamber (5) is enabled to be heated slowly to a lower temperature without being damaged, preventing energy consumption from increasing. The water in the water tank (2) is enabled to be heated by means of the first heater (7). Since the first heater (7) is a high-power heater, a fast and high-temperature heating process is performed. The heated water is transferred to the brewing chamber (4) to carry out the brewing process and then the brewed beverage is transferred to the beverage chamber (5). The brewing chamber (5) filled with the beverage is heated again by means of the second heater (8). Thus, the beverage is enabled to be kept at the desired temperature for the desired period of time. The process steps are controlled by means of the control unit (9).

By means of the present invention, a hot beverage preparation machine (1) is realized, which ensures that energy consumption is not increased and user satisfaction is improved by means of the plurality of heaters (7, 8) with different functions. By means of the independent operation of the two heaters (7, 8) with different functions, the brewing process is performed quickly and the beverage can be kept at the desired temperature for the desired period of time.

## Claims

1. A hot beverage preparation machine (1) **comprising**
- a water tank (2) suitable to be filled with water;
- a heater (3) which enables the water in the water tank (2) to be heated;
- a brewing chamber (4) wherein the water heated in the water tank (2) is delivered and wherein the brewing process is performed as the result of the interaction between the raw beverage material and water;
- a beverage chamber (5) wherein the brewed beverage is delivered; and
- a heating surface (6) which is disposed under the beverage chamber (5) and which is in contact with the beverage chamber (5),
**characterized by** a first heater (7) and a second heater (8) which are disposed under the heating surface (6).

2. A hot beverage preparation machine (1) as in Claim 1, **characterized by** the first heater of the resistance type (7) and the second heater of the PTC type (8).

3. A hot beverage preparation machine (1) as in Claim 1 or Claim 2, **characterized by** the second heater (8) which enables the empty beverage chamber (5) and the heating surface (6) to be heated before the brewing process.

4. A hot beverage preparation machine (1) as in any one of the above claims, **characterized by** the first heater (7) which enables the water in the water tank (2) to be heated before being transferred to the brewing chamber (4).

5. A hot beverage preparation machine (1) as in any one of the above claims, **characterized by** the second heater (8) which enables the prepared beverage to be kept at the desired temperature.

6. A hot beverage preparation machine (1) as in any one of the above claims, **characterized by** a control unit (9) which enables a preheating process to be performed wherein the heating surface (6) and the beverage chamber (5) are heated to a predetermined level by means of the second heater (8) before the brewing process is carried out.

7. A hot beverage preparation machine (1) as in Claim 6, **characterized by** a temperature sensor (10) which is disposed on the heating surface (6), and the control unit (9) which ends the preheating process depending on the data received from the temperature sensor (10).

8. A hot beverage preparation machine (1) as in any one of the above claims, **characterized by** the control unit (9) which ensures the performance of the steps of heating the heating surface (6) and the beverage chamber (5) by activating the second heater (8) before the brewing process starts, heating the cold water in the water tank (2) by being passing over the first heater (7) to be taken into the brewing chamber (4), filtering the brewed beverage to be transferred to the beverage chamber (5), and keeping the beverage hot by activating the second heater (8) again.
